# EUROPEAN PATENT SPECIFICATION

(11) **EP 1 071 500 B1**
(45) Date of publication and mention of the grant of the patent: **02.03.2005**
(21) Application number: 99916386.8
(22) Date of filing: 05.04.1999
(51) Int. Cl.: B01D 15/08, B01J 20/00, B01J 8/18, B01J 8/10, B01D 15/02

(54) **SMALL DENSE MICROPOROUS SOLID SUPPORT MATERIALS, THEIR PREPARATION, AND USE FOR PURIFICATION OF LARGE MACROMOLECULES AND BIOPARTICLES**
DICHTE MIKROPORÖSE FESTSTOFFTRÄGERMATERIALIEN, SEINE HERSTELLUNG UND SEINE VERWENDUNG FÜR DIE REINGEWINNUNG VON MAKROMOLEKÜLEN UND BIOMATERIALIEN
MATERIAUX DE SOUTIEN DENSES, SOLIDES, MICROPOREUX ET DE PETITE TAILLE, PROCEDES DE FABRICATION ET D'UTILISATION DANS LA PURIFICATION DE GROSSES MACROMOLECULES ET DE BIOPARTICULES

(30) Priority: 06.04.1998 US 80837 P
(43) Date of publication of application: 31.01.2001
(73) Proprietor: Ciphergen Biosystems, Inc., Fremont, CA 94555 (US)
(72) Inventor: VOUTE, Nicolas, F-95459 Vigny (FR); BOSCHETTI, Egisto, F-78720 Croissy sur Seine (FR); GIROT, Pierre, F-75010 Paris (FR)
(74) Representative: Woods, Geoffrey Corlett
(86) International application number: PCT/US1999/007480
(87) International publication number: WO 1999/051316

(56) References cited:
- EP-A- 0 635 301
- US-A- 5 372 820
- US-A- 5 470 463
- US-A- 5 486 293
- US-A- 5 567 615

## Description

### Field of Invention

The present invention relates to solid supports for purification of bioparticles or high molecular weight macromolecules.

### Background of the Invention

High molecular weight ("HMW") macromolecules such as nucleic acids, polysaccharides, protein aggregates, and bioparticles such as viruses, viral vectors, membrane proteins and cellular structures, are difficult to isolate from biological sources due to their physical characteristics. Classical techniques for isolating HMW macromolecules and bioparticles include gradient density centrifugation, microfiltration, ultrafiltration and chromatography. These methods present a number of practical disadvantages. Gradient density centrifugation is a time consuming and energy intensive process and provides only limited purification due to intrinsic molecular or bioparticle heterogeneities. (Green *et al.,* "Preparative purification of supercoiled plasmid DNA for therapeutic applications," *Biopharm,* pp. 52-62 (May 1997).) Membrane technologies, such as cross flow filtration, require a substantial shear stress to maintain permeate flux and these levels of sheer stress are prejudicial to the integrity of the molecules or particles and consequently to their biological activities. (Braas *et al.*, "Strategies for the isolation and purification of retroviral vectors for gene therapy," *Bioseparation,* 6:211-228 (1996).)

Packed bed chromatography and adsorption of large molecular weight molecules or particles are also hampered by the physical characteristics of these compounds, setting stringent limitations in terms of operating bed capacity and pressure drop.

On the one hand, these large biological structures do not penetrate into classical gel media commonly used in bioseparation and, as a consequence, these large biological structures do not access the internal surface area and pore volume, where the majority of the adsorptive sites are located. Therefore, the partitioning between mobile and liquid phase and the binding capacity is inherently limited. On the other hand, there is no interest in producing media with pores large enough to accommodate these large or HMW biological structures because the intraparticle diffusion in the pores of such media would be extremely limited due to their large size. Consequently the mass transfer and the productivity of such media would be low.

Therefore, chromatography and adsorption of very large molecular weight molecules and bioparticles are hampered by a screening effect, independent of the mode of adsorption. If adsorption of the target HMW compounds occurs, it is restricted only to the external surface area of sorbent beads, and therefore yields low binding capacities. This mode of operation, known as positive adsorption, is rarely used due to this very low binding capacity.

Direct recovery of large macromolecules in the flowthrough of solid phase beds is known as negative solid phase purification. HMW compounds flow through the column without being delayed, while smaller contaminants, like proteins, amino acids, sugars and salts, diffuse in the intraparticle volume of the solid phase porous beads, where they can be delayed or adsorbed. This approach shows numerous drawbacks detrimental to performance of separations. First, if separation is based on size exclusion, the loading and the operational linear velocity are very low, dramatically reducing the column productivity. In addition, if separation is based on adsorption, large resin volumes are required as all the contaminants must diffuse and be adsorbed into the beads. Furthermore, negative purification processes do not offer any selectivity between different types of very large macromolecules, as they co-elute in the flowthrough. In particular, it is impossible to segregate plasmids from genomic DNA and large RNA molecules using negative chromatography purification processes.

As an intermediate case between positive and negative adsorption processes, the operating conditions can be set such that both the HMW compounds and the contaminants are adsorbed. In this situation, flowthrough of the target component (such as a very large macromolecule) will occur only after the initial saturation of the external surface of the beads. Such conditions, however, lead to a decrease in target component recovery.

In addition, solutions of HMW biopolymers (such as nucleic acids and polysaccharides) and bioparticles tend to have a high viscosity. In turn, the high viscosity impairs purification of these compounds in many ways; for example:
- it reduces the diffusivity of the compounds, and therefore tremendously reduces boundary layer and intraparticle mass transfer rate; and
   it increases the hydraulic resistance of a fixed bed column and generates large pressure drops.

The augmentation of mass transfer resistance is extremely prejudicial to the adsorbent capture efficiency. Longer residence times can potentially counterbalance the reduced rate of adsorption. In order to achieve such longer residence time, however, it would be necessary to use very low linear velocity or very long columns. Both strategies are impracticable as they result in very long purification cycle time and increased pressure drop.

Large pressure drops generated by high viscosity samples, such as those containing HMW macromolecules, restrict the use of semi-rigid adsorbents as these semi-rigid adsorbents are deformed under the mechanical strain and lead to clogging of the column. In order to reduce the pressure drop, extremely low flow rates or very large particle diameter could be used. However, at the preparative level, both solutions are unrealistic because they lead to large cycle time on the one hand, and very low binding capacity due to too small interactive surface area of large bioparticles on the other hand.

Furthermore, solid particles injected through a packed bed of beads are progressively trapped in the intraparticle spaces where they accumulate and tend to irreversibly clog the column.

Some of the problems associated with high viscosity samples and the presence of particulates in a feed stock can be circumvented by using a stirred tank. However, the solid and liquid mixing using stirred tank contactors restrict the capture efficiency. Compared to a fixed bed, the productivity of a stirred tank is reduced due to the low concentration of the adsorbent in the contactor. Moreover, semi-open systems, such as stirred tanks, are difficult to clean, sanitize and automate.

Fluidized bed contactors are also an alternative means for processing high viscosity samples and samples containing insoluble particles. (*See, e.g.,* Buijs and Wesselingh, "Batch Fluidized ion-exchange column for stream containing suspended particles," *J*. *Chrom.*, 201:319-327 (1980); Chase "Purification of proteins by adsorption chromatography in expanded beds," *Tibtec*, 12:296-303 (1994); Somers *et al.*, "Isolation and purification of endo-polygalacturonase by affinity chromatography in a fluidized bed reactor," *Chem. Eng. J.,* 40: B7-B19 (1989); and Wells *et al.,* "Liquid fluidized bed adsorption in biochemical recovery from biological suspensions," Separation for Biotechnology, M. Verall, ed., Ellis Harwood, Chicester, pp. 217-224 (1987).) However, the media or adsorbents commercially available at present are inadequate for the purification of HMW molecules and particles, (*See* US Pat. No. 5,522,993 and European patents EP 0 538 350 B1, EP 0 607 998 B1.) The internal porosity of these media or adsorbents is inaccessible for very large solutes, and their large particle diameter undesirably decreases the external surface area. As a result, these media provide only limited capacity for the purification of HMW molecules and particles.

Fluid bed separation processes are attractive for the recovery of bioproducts as they achieve lower operational pressures than a packed bed and are resistant to fouling by particulates and suspended materials in the feed stock. Fluidized-bed technology has been successfully employed as early as 1958 for the recovery of small molecules, such as antibiotics. *(See* Bartels *et al.,* "A novel ion exchange method for the isolation of streptomycin," *Chem. Eng. Prog.,* 54(8):49-51 (1958); Belter *et al*., "Development of a recovery process for novobiocin," *Biotechnol.Bioeng.,* 15:533-549 (1973).) More recently, this technology has been applied for the recovery of larger molecular weight molecules, such as proteins, from unclarified feed stocks. *(See,* A. Bascoul, "Fluidisation liquide-solide. Etude hydrodynamique et extraction des proteines.," These d'etat, Universite Paul Sabatier, Toulouse, France (1989); B. Biscans, "Chromatographie d'echange d'ions en couche fluidisee. Extraction des proteines du lactoserum," These de docteur ingenieur, Institut national polytechnique de Toulouse, Toulouse, France (1985); Biscans *et al., Entropie,* 125/126: 27-34 (1985); Biscans *et al., Entropie,* 125/126: 17-26 (1985); Draeger and Chase, "Liquid fluidized bed adsorption of protein in the presence of cells," *Bioseparation*, 2: 67-80 (1991);. Draeger and Chase, "Liquid fluidized beds for protein purification," *Trans IChemE,* 69(part C): 45-53 (1991); J. van der Weil, "Continuous recovery of bioproducts by adsorption," PhD Thesis, Delft. University, Delft (1989); and Wells *et al.,* "Liquid fluidized bed adsorption in biochemical recovery from biological suspensions." Separation for Biotechnology, M. Verall, ed., Ellis Harwood, Chicester, pp. 217-224 (1987).)

US Pat. No. 4,976,865 describes a method and a column for fluidized bed chromatographic separation of samples containing molecules which have a tendency towards autodenaturation, including biopolymers of medium molecular weight, such as proteins, enzymes, toxins and antibodies. This method assumes that any suspended material in the sample or feed stock is removed during loading and washing, while the molecules of interest diffuse inside the adsorbent loaded in the column.
However, the operational binding capacity of the procedure and materials describe in US Pat. No. 4,976,865 are inadequate for the biopurification of HMW molecules and bioparticles.

US Pat. No. 5,522,993 and European patents EP 0 538 350 B1, EP 0 607 998 B1, describe special polymeric resin media, especially agarose, having small particles of dense materials within the media, and their use in fluidized beds. The dense material described for use trapped within the polymeric resin media include glass, quartz and silica. However, despite the gain in density of this media due to the presence of the small particles of dense material, the density is still relatively low, and thus in order to achieve a stabilized fluidized bed, large bead diameter is required to compensate for the low density differential between the liquid and solid phases. European patents EP 0 538 350 B1, EP 0 607 998 B1 also describe beads which consist of a porous conglomerate of polymeric material and density controlling particles therein. The beads described in these three patents are inadequate for the isolation of HMW molecules and bioparticles as the low density and the Large particle size of these beads are not conducive to separation of HMW macromolecules and bioparticles.

### Summary of the Invention

The present invention provides new dense mineral oxide solid supports or microbeads which exhibit high density, low porosity, high external surface area and high binding capacity. The small dense mineral oxide solid supports or microbeads of the present invention may be used in various solid phase adsorption and chromatography methods including packed bed and fluidized bed methods, and are particularly useful in fluidized bed devices and allow higher linear velocities to be used in such fluidized bed devices. These solid supports or microbeads are particularly suited for separating or isolating large biological molecules, such as bioparticles and high molecule weight macromolecules, especially In fluidized bed or expanded bed methods.

Accordingly, the present invention provides mineral oxide solid supports or microbeads having a density in the range of 1.7 to 11 g/cm³ and particle size in the range of 10 µm to 100 µm, and comprising:
a) a mineral oxide matrix having an external surface and pores wherein the pores have a pore volume which is 5% to 25% of the total volume of the mineral oxide matrix; and
b) an interactive polymer network which is rooted in the pores and is layered on the external surface of the mineral oxide matrix so that subsequent interaction with macromolecules occurs on the external surface area of the support.

The dense mineral oxide solid supports or microbeads of the present invention have densities of, preferably, from 2.1 to 10 g/cm³ or 2.1 to 11 g/cm³.

The mineral oxide matrix may comprise particles of one mineral oxide, or any combination of two or more mineral oxides. Preferably, the mineral oxide matrix is comprised of particles of very dense mineral oxides, such as titania, zirconia, yttria, ceria, hafnia, tantalia, and the like, or mixtures thereof.

The interactive polymer network may comprise copolymerized monomers, bifunctional monomers, or combinations thereof; or crosslinked synthetic linear polymers, natural organic polymers, or combinations thereof; and the components used to form the interacting polymer network are selected in order to confer a predetermined property or properties to the resulting polymer network. The interacting polymer network components may be selected such that the resulting polymer network has affinity for a desired target molecule, or such that the resulting polymer network has a predetermined property or properties which allow the polymer network to be subsequently functionalized or derivatized to have affinity for a desired target molecule using techniques well known to the skilled artisan.

The mineral oxide sold supports are prepared by a method which comprises:
(a) preparing a mixture of particles of at least one mineral oxide;
(b) forming a mineral oxide matrix from said mixture;
(c) sintering the resulting mineral oxide matrix at a high temperature which melts subparticles in the mineral oxide matrix, wherein the sintering reduces the pore volume of the mineral oxide matrix to 5% to 25% of the total volume of the mineral oxide matrix; and
(d) forming an interactive polymer network rooted in the pores and layered on the surface of the resulting sintered mineral oxide matrix.

The particle size of the mineral oxide starting materials may be varied depending on the surface characteristics desired, and typically for relatively smooth mineral oxide matrix surfaces, particle sizes in the range of 0.1 µm to 3 µm are used, and for rougher mineral oxide matrix surfaces, particle sizes in the range of 3 µm to 15 µm are used.

The mineral oxide solid supports or microbeads of the invention are used in solid phase adsorption and chromatography methods. Accordingly, the present invention also provides a method of separating a target molecule by solid phase adsorption comprising passing a sample containing said target molecule through a chromatography device loaded with a solid phase matrix comprising mineral oxide solid supports of the invention.

A desired biological molecule can therefore be supported from a sample containing the molecule by loading a chromatography device with a chromatography bed comprised of the mineral oxide solid supports or microbeads, feeding the sample containing said desired biological molecule into the chromatography device, discharging undesired components and impurities of the sample from the chromatography device, releasing the desired biological molecule from the dense mineral oxide solid supports and eluting the desired biological molecule from the chromatography device. The interactive polymer network of the dense mineral oxide solid supports used in this method is prepared such that it has affinity for the desired biological molecule, or the interactive polymer network may be functionalized or derivatized to have affinity for the desired biological molecule. In addition, when the sample is fed into the chromatography device, the desired biological molecule is adsorbed to the dense mineral oxide solid supports or microbeads.

In an embodiment therefore, a desired biological molecule is separated from a sample solution containing the same by a method comprising
a) loading a chromatography device with a chromatography bed comprised of said mineral oxide solid supports, wherein the interactive polymer network is functionalized to have affinity for the desired biological molecule;
b) feeding the sample solution containing said desired biological molecule into the chromatography device, whereby the desired biological molecule is adsorbed to the mineral oxide solid supports;
c) washing the chromatography device with a washing buffer and discharging undesired components and impurities of the sample solution from the chromatography device;
d) feeding an eluting buffer into the chromatography device, wherein said eluting buffer causes the desired biological molecule to be released from the mineral oxide solid supports; and
e) collecting the desired biological molecule.

The present invention also concerns a fluid bed method for chromatographically separating a desired biological molecule from a sample containing the same comprising providing a fluid bed reactor or column with a chromatography bed comprised of the mineral oxide solid supports, creating a fluidized bed of said dense mineral oxide solid supports in said fluid bed reactor or column, feeding the sample containing said desired biological molecule into the fluid bed reactor or column under conditions which maintain the dense mineral oxide solid supports in the fluidized bed, discharging undesired components and impurities of the sample from the fluid bed reactor or column, and effecting the release of the desired biological molecule from the dense mineral oxide solid supports and eluting the desired biological molecule from the fluid bed reactor or column.

The interactive polymer network of the dense mineral oxide solid supports used in this method is prepared such that it has affinity for the desired biological molecule, or the interactive polymer network may be functionalized or derivatized to have affinity for the desired biological molecule. In addition, when the sample is fed into the fluid bed reactor or column, the desired biological molecule is adsorbed or attached to the dense mineral oxide solid supports or microbeads. An embodiment of this method thus comprises:
a) loading a fluidized bed column with a chromatography bed comprised of said mineral oxide solid supports, wherein the interactive polymer network is functionalized to have affinity for the desired biological molecule
b) feeding an initial buffer into said fluidized bed column at a linear velocity which causes the mineral oxide solid supports to form a fluidized bed;
c) feeding the sample solution containing said desired biological molecule into the fluidized bed column at a linear velocity which maintains the mineral oxide solid supports in the fluidized bed, whereby the desired biological molecule is adsorbed to the mineral oxide solid supports;
d) washing the chromatography device with a washing buffer and discharging undesired components and impurities of the sample solution from the fluidized bed column device;
e) feeding an elution buffer into the fluidized bed column, wherein said elution buffer causes the desired biological molecule to be released from the mineral oxide solid supports; and
f) collecting the desired biological molecule eluted from the fluidized bed column.

The linear velocity in step (c) is preferably in the range of 100 cm/hour to 3000 cm/hour.

### Detailed Description of the Invention

Classical chromatography media and their methods of use are inadequate for the purification of HMW macromolecules and large molecular entities The present invention provides adsorbents (also referred to herein as "solid supports" or "microbeads" ) having a small particle diameter and high density which provide large binding capacity for HMW compounds and can be operated in a low pressure drop, high throughput fluid bed process. Furthermore, the microbeads of the present invention can be modified by functionalized polymers or monomers enabling the exploitation of high selectivity separation.

According to the present invention very large or HMW macromolecules or bioparticles can be separated using solid particles of small diameter and very high density. These particles are designed to be used in suspension, and in particular, in fluid bed modes. Unlike packed bed columns, fluidized bed contactors exhibit low hydraulic resistance and are not impeded by pressure drop limitation or fouling.

Existing typical fluid bed particles include porous gel materials having particle diameters of typically 100-300 µm and mean particle density of about 1.2 g/ml. (*See* Batt *et al.,* "Expanded bed adsorption process for protein recovery from whole mammalian cell culture broth," *Bioseparation,* 5: 41-52 (1995).) These materials are not suited for the separation of very large or HMW macromolecules and biopartictes as these components do not diffuse within the pores or gel network of the media and adsorb only on the external surface area of the media. Due to the large diameter of existing fluidized-bed gel particles, the external surface area of a given amount of bead volume yields only a modest value, and as a result the binding capacity is very small. Moreover, gel-type materials offer only limited density, typically within 1.1 to 1.3 g/cm³. These low densities set stringent limitations in terms of operating velocity that limit the productivity of the column.

Rather than enlarging the pore volume allowing the HMW macromolecules or particles to diffuse, according to present invention the particle size of the beads are decreased and the surface area is increased due to the diminution of the average particle diameter. The surface area per unit volume of a bed of spherical particles varies proportionally with the inverse of the particle diameter. Therefore, by decreasing the particle size, the surface area of media is advantageously increased, thereby increasing the binding capacity for a given molecule.

However, when dealing with a fluid bed, the usefulness of small diameter gel-based beads is limited by the terminal velocity of the solid material. The particle terminal velocity, *i.e.,* the velocity at which the beads are ejected from the column by an upward liquid flow, depends on the square of the particle diameter times the density differential between solid and liquid phases. For small and light beads the particle terminal velocity is so low that operation in fluid bed mode would require an unrealistically small operating velocity in order to keep the beads from leaving the column. That is, small get based particles, which have low densities, would be ejected from the column or contactor even at modest fluidization velocities, *e.g.*, less than about 50 cm/hour. Therefore, large bead diameters must be used with these beads to compensate for the low density differential between the liquid and the solid phases; however, large particle diameters result in lower binding capacity for the media.

This problem is overcome according to the present invention by using small diameter particles made using solid materials which exhibit a very high density that permits fluidization of these small diameter particles or microbeads even at elevated velocities. Thus, in the solid supports or microbeads according to the present invention, high external surface area, and consequently high binding capacity, resulting from small particle diameter is combined with a high bead or particle solid density which allows rapid process velocities to be used in methods using these solid supports or microbeads according to the present invention.

The solid support materials or adsorbents of the present invention are made using very dense mineral oxides such as titania, zirconia, yttria, ceria, hafnia, and tantalia or mixtures thereof. Unlike classic porous mineral oxide based materials for chromatographic application, the solid support materials or adsorbents ofthe present invention have low pore volume so that the apparent density of the materials is a large fraction of the intrinsic material density. In the solid support materials or adsorbents of the present invention, the pore volume is 5% to 25%, and preferably 5% to 15%. of the total volume of the bead volume. The pore volume of the solid support materials or adsorbents can be modulated by adequate temperature treatment.

In the solid support materials or adsorbents of the present invention, the pore volume is left just large enough to allow polymers to be rooted in the pores, and these rooted polymers layer on the external surface of the beads where the interaction with the macromolecules occurs. The resulting layer of polymers, or interactive polymer network, is stable and remains in place. The interaction of the desired molecules occurs on the external surface area of the beads due to the rooted polymers.

Mineral oxide matrices or microbeads for use in the present invention are prepared by methods which allow condensing of small particles of mineral oxide or condensing of salt soluble molecules of heavy elements. A variety of techniques known to the skilled artisan, such as emulsion/suspension techniques, spray-drying, or sol-gel methods (as described, for example, in U.S. Pat. No. 5,015,373), may be used to effect the agglomeration of the compositions described in the present invention.

In general, microparticles of a mineral oxide (*e.g.*, titania powder or zirconia powder, or the like) having a diameter in the range of 0.1 µm to 15 µm are suspended in a water solution containing soluble sodium silicate at alkaline pH, and the solution is poured into an oil bath under stirring to obtain a suspension of droplets that contain microparticles of the mineral oxide. Once the oil suspension is acidified with an organic acid, sodium silicate forms a gel (the liquid droplet is turned into a gel particle) that entraps the solid microparticles of dense mineral oxide. These gelified microbeads are then separated from the oil using well-known physical means and are dried at about 80°C- 200°C. The gel hardening process allows the conglomerate of small particles to stabilize. Moreover, an inter small particle porosity or intra-bead porosity appears due to the reduction of the gel volume. At this stage, the pore volume is between about 30% to 70% of the bead volume.

The resulting beaded porous mineral oxide particles are then fired at a high temperature, *e.g.*, in the range of about 900°C to 1500°C, and preferably between about 1000°C to 1400°C, for a period of about 1 to 12 hours so as to melt the submicroparticles together and reduce the particle diameter and reduce the pore volume to less than about 30%. The firing temperatures and times are dependent on the nature of the mineral oxide(s) used as the starting material, and can be readily determined by the skilled artisan.

The dried low porosity mineral oxide particles are then impregnated with a solution of functionalized monomers or polymers and crosslinkers by adding the dried low porosity mineral particles to a monomer solution, wherein the amount of the monomer solution is in excess the pore volume of the porous mineral material, preferably by about 5% to 10%, and starting the polymerization. The polymerization of the organic products is accomplished by means of chemical inducers, including but not limited to well known chemical catalysts associated or not to physical inducers, such as intense UV light or any other form of irradiation such as gamma irradiation or microwaves. Temperature may also be used to induce crosslinking or copolymerization of the monomer solution. A desired functionalization of the polymers is obtained by selecting the appropriate monomers before polymerization, or by classical chemical reactions on the organic layer after polymerization.

As an example, according to the present invention, hafnia mineral oxide matrices or microbeads may be made by various means known in the art that generally yield materials having a pore volume of between 30 to 70% of the total bead volume. Thereafter, the resulting hafnia beads are fired at 1200 to 1400°C for about 2 to 4 hours in order to collapse the pore volume and increase the specific density of the beads. As a result, the initial pore volume of about 30% to 70% is decreased to about 10% to 20%.

After firing the base mineral oxide solid support materials or mineral oxide matrices, a solution containing a mixture of monomers, which include an appropriate ligand or appropriate linker, is injected in the pore volume of the resulting low pore volume hafnia beads and is copolymerized in the presence of crosslinkers. The impregnation volume of the monomer solution should be a little higher, *e.g.*, 1% to 10% higher, and preferably 5% to 10% higher, than the pore volume of the beads such that the functionalized polymer is anchored or rooted in the internal porosity and is also present, as a thin layer, on the external surface of the dense solid support materials or microbeads.

Solid supports or adsorbents made in accordance with the present invention may then be separated, washed and used in various chromatographic techniques, and in particular, the small, dense solid supports or microbeads can be used in fluid bed devices in order to process and separate biological molecules or bioparticles of interest, including very large macromolecules and bioparticles.

The interacting polymer networked with the mineral oxide matrix of small, dense solid supports or microbeads of the present invention may comprise hydrophobic or hydrophilic polymers or both. The polymeric structure can be obtained by polymerization of monomers under specified conditions or can be the result of crosslinking linear soluble polymers.

In the case where monomers are copolymerized on the surface of the mineral oxide particles or beads with some rooting inside the pores, the initial impregnating solutions can be composed of monomers from different families, such as acrylic monomers, vinyl compounds, and allyl monomers, or a mixture thereof. Typical monomers for use in the present invention, include but are not limited to, the following:
- Aliphatic ionic, non-ionic and reactive derivatives of acrylic, methacrylic, vinylic and allylic compounds such as, but not limited to, acrylamide, dimethylacrylamide, trisacryl, acrylic acid, acryloylglycine, diethylaminoethylmethacrylamide, vinylpyrrolidone, vinylsulfonic acid, allylamine, allylglycydylether, or derivatives thereof, and the like;
- Aromatic ionic, non-ionic and reactive derivatives of acrylic, methacrylic, vinylic and allylic compounds, such as, but not limited to, vinyltoluene, phenylpropylacrylamide, trimethylaminophenylbutylmethacrylate, tritylacrylamide, or derivatives thereof, and the like;
- Heterocyclic ionic, non-ionic and reactive derivatives of acrylic, methacrylic, vinylic and allylic compounds, such as, but not limited to, vinylimidazole, vinylpyrrolidone, acryloylmorpholine, or derivatives thereof, and the like.

Bifunctional monomers may also be used in forming the interactive polymer network of the solid supports or microbeads of the present invention in order to increase the stability of the gel structures. Bifunctional monomers suitable for use in the present invention are those containing double polymerizable functions, such as two acrylic groups, that react with other monomers during the process of forming the interactive polymer network structure. More specifically, monomers which may be used in forming the interacting polymer network of the solid support materials or microbeads of the present invention include, but are not limited to, the following:
- Bisacrylamides, such as, but not limited to, methytene-bis-acrylamide, ethylene-bis-acrylamide, hexamethylene-bis-acrylamide, glyoxal-bis-acrylamide, and the like;
- Bis-methacrylamides, such as, but not limited to, methylene-bis-methacrylamide, ethylene-bis-rnethacrylamide, hexamethylene-bis-methacrylamide, and the like;
- Bis-acrylates, such as, but not limited to, diethylglycoldiacrylate, diethylglycolmethacrylate, ethyleneglycoldiacrylate, ethyleneglycoldimethacrylate, and the like;
- Ethyleneglycol-methacyletes, and the like; and
- Diallyltartradiamide.

The monomers, bifunctional monomers, or combinations thereof, selected to form the interactive polymer network of the solid supports or microbeads of the present invention confer a predetermined property or properties to the resulting polymer network. A polymerized or crosslinked gel network rooted in the pores is formed and layered over the surface of the beads. Properties which are of primary interest for the solid support materials or compositions of the present invention include, but are not limited to, ion exchange effects, hydrophobic association, reverse phase interaction, biospecific recognition, and all intermediates of such, or combinations of two or more of these properties

Soluble organic polymers, such as linear polymers from synthetic or natural sources, may also be used to fill the pore volume and coat the external surface area of the mineral oxide dense beads of the present invention. The synthetic and natural soluble polymers are crosslinked in place (on the surface and inside the pore structure of the mineral oxide beads or particles) by classical chemical and physical means, e.g., by chemical bifunctional crosslinkers, such as but not limited to, bisepoxy reagents, bisaldehydes, and the like. After such polymers are crosslinked, a stable gel network is formed which is anchored or rooted in the pores and layered on the surface of the mineral oxide matrix of the solid supports or microbeads of the present invention.

Crosslinking agents useful in the present invention include vinyl monomers having at least one other polymerizable group, such as a double bound, a triple bond, an allylic group, an epoxide, an azetidine, or a strained carbocyclic ring. Preferred crosslinking agents include, but are not limited to, N,N'-methylene-bis-(acrylamide), N,N'-methylene-bis-(methacrylamide), diallyl tartradiamide, allyl methacrylate, diallyl amine, diallyl ether, diallyl carbonate, divinyl ether, 1,4-butanedioldivinylether, polyethyleneglycol divinyl ether, and 1,3-diallyloxy-2-propanol.

Synthetic linear polymers which may be used in the present invention include, but are not limited to, polyethyleneimines, polyvinyl alcohol, polyvinylamines, polyvinylpyrrolidone, polyethyleneglycols, polyaminoacids, nucleic acids, and their derivatives. Natural soluble polymeric molecules which may be used in the present invention include, but are not limited to, polysaccharides, such as agarose, dextran, cellulose, chitosans, glucosaminoglycans and their derivatives, and nucleic acids.

The small, dense mineral oxide solid supports or microbeads of the present invention may be used advantageously in various chromatography methods which may be carried out in a fluidized bed mode, a packed bed mode, or other modes of operation. The solid supports or microbeads of the present invention are particularly useful in methods for separating or isolating a desired molecule or bioparticle of interest from a crude sample with a fluidized bed mode of operation.

Methods for separating or purifying desired macromolecules or target molecules of interest from a sample typically involve at least two steps. The first step is to charge a chromatography device, such as a packed or fluidized bed column, containing the mineral oxide solid supports or microbeads of the present invention with a solution containing a mixture of biomolecules, at least one of which is the target molecule of interest. The second step is to pass an eluent solution or elution buffer through said chromatography device to effect the release of the target molecule of interest from the solid supports or microbeads and the chromatography device, thereby causing the separation of the target molecule from the sample.

"Stepwise" elution can be effected, for example, with a change in solvent content, salt content or pH of the eluent solution or elution buffer. Alternatively, gradient elution techniques well known in the art can be employed. Elution buffers or eluent solutions suitable for use in the present invention are well known to those of ordinary skill in the art. For example, a change in ionic strength, pH or solvent composition may effect release of a molecule which is bound to a solid phase support. Elution buffers or eluent solutions may comprise a salt gradient, a pH gradient or any particular solvent or solvent mixture that is specifically useful in displacing a desired macromolecule or target molecule of interest.

For methods of separating or isolating a desired macromolecule in fluidized bed devices, the small, dense solid support materials or microbeads of the present invention functionalized with an interactive polymer nerwork having an affinity for the desired macromolecule are loaded into a fluid bed device, and a sample or a feed stock containing the desired macromolecule to be separated is fed into the fluid bed device. The sample or feed stock flows through the fluid bed device in an upward direction so as to lift the solid support materials or microbeads with limited pressure drop. The desired macromolecules are in such a way adsorbed on the surface of small dense solid support materials or microbeads due to the functionality(ies) carried by the interactive polymer network of the beads, and thus impurities are separated by the continuous upward flow. Washing in the same direction is followed and adsorbed macromolecules are desorbed by passing an eluent solution or elution buffer through the fluid bed device to effect separation of the desired macromolecule as a result of physicochemical changes, such as pH changes, ionic strength adaptation, or solvent composition, and other means well known to the skilled artisan.

Once the separation is completed, the solid supports or microbeads are washed extensively to eliminate all very tightly adsorbed biological materials, and reequilibrated in the appropriate solution so that another separation cycle can be initiated.

The methods of the present invention are effective to isolate or separate a broad range of large biological molecules, including proteins (such as thyroglobutin, α2 macroglobulin, antibodies of IgG and IgM classes, and the like), carbohydrates (such as hyaluronic acid), bioparticles (such as viruses, viral vectors, membrane proteins, cellular structures, and the like), and nucleic acids (such as plasmids, DNA, RNA, large oligonucleotides, and the like). The solid supports or microbeads of the present invention are particularly useful in methods for separating or isolating high molecular weight macromolecules, such as nucleic acids, plasmids, polysaccharides, protein aggregates, and bioparticles such as viruses, viral vectors, membrane proteins and cellular structures. Such methods are preferably performed in the fluidized bed mode of operation.

The main advantages of the small, dense solid support materials or microbeads of the present invention for use in the capture of high molecular weight macromolecules and biological particles are as follows:
a) the low particle size yields a high external surface area and consequently an increased binding capacity compared to traditional large porous gel based media;
b) high external surface area binding allows for minimizing pore volume and maximizing the bead density,
c) very dense beads allow high linear process velocities to be used in fluidized bed contactors or devices and low operating pressure even in the presence of viscous material, such as samples containing large macromolecules and biopartides;
d) very rapid mass transfer is possible due to the absence of intraparticle diffusion, *i.e.,* using the external surface area as the adsorption-eluting mechanism, the final collected volume is smallet than from conventional fixed or fluid bed technologies with existing porous materials, and thus the adsorption/elution kinetics are very rapid and adsorption can be performed at very low residence time with negligible loss of the target molecule in the effluent;
e) adsorption of contaminants is reduced compared to traditional porous gel media, because the adsorption surface is confined to a small external layer and does not include the intraparticle volume;
f) separation between different types of very large macromolecules is possible by adjusting the elution conditions.

Possible variations on the design of the small, dense mineral oxide solid support materials or microbeads ofthe present invention include, but are not limited to, changing the shape of external surface area of the materials, changing the composition of mineral oxides in the materials, and changing the composition of the interactive polymer network that is rooted in the mineral oxide matrix or base materials of the small, dense solid support materials or microbeads of the present invention. In addition, the surface of the mineral oxide solid phase or base material, where substantially all the macromolecules interact, can be smooth, or rough in order to increase the surface area, as shown in the examples below.

The invention is further defined by reference to the following examples that describe in detail the preparation of the small, dense solid supports or microbeads of the present invention and methods of using the same.

### Example 1:

### Preparation of collapsed porous silica microbeads with enhanced density by emulsion condensation

30 grams of dry solid irregular silicon oxide (having particle sizes in the range of 0.3-3 µm) were dispersed under stirring in 15 ml of a concentrated 35% sodium silicate solution and then diluted with 20 ml of distilled water and 9 ml of acetic acid. The resulting homogeneous suspension was slowly poured into an agitated paraffin oil bath containing 2% of sorbitan sesquioleate and dispersed as small droplets.

The suspension was stirred for 1 hour at ambient temperature, and then heated at 85°C for 1 hour.

Dispersed liquid droplets containing silicon oxide particles were thus turned into gelled beads. The resulting gelled beads had an average diameter of 50 µm and comprised a silica hydrogel having trapped within its network solid microparticles of pre-forrned solid silicon oxide. The gelled beads were recovered by filtration, washed and dried at 80°C under air stream for 16 hours. During the drying, the hydrogel was progressively dehydrated and acted to bind the solid silicon oxide microparticles. The pore volume of resulting beads was about 1/3 of the bead volume. The beads were then fired at 1100°C for 2 hours. As a result of this firing, the bead sub-particles were partially melted and fused to each other thereby reducing the pore volume. After this treatment the final void pore volume represented about 10% of the whole bead volume. The density of the dry beads was about 2.1 g/cm³.

The diameter of the bead and the distribution of the diameters are controlled by the mechanical agitation of the paraffin oil bath and the amount of surfactant used. Other means of emulsifications can be used to control the bead diameter.

The resulting dense solid support materials or microbeads may be subsequently coated or filled with an interacting polymer network comprised of various organic polymers in order to confer specific biomolecule adsorption properties to the solid support materials or microbeads.

### Example 2:

### Preparation of zircon (zirconium silicide) microbeads with reduced pore volume

Microbeads were prepared as described in Example 1 except that silicon oxide solid irregular microparticles were replaced by zircon fine powder (having particle sizes in the range of 0.1- 5 µm). The dried microbeads obtained with this methodology were then fired at 1400°C for 4 hours to reduce the initial pore volume (about 1/3 of bead volume) to about 10% of bead volume.

The density shown by these beads was about 4.2 g/cm³.

The resulting dense solid support materials or microbeads may be subsequently coated or filled with an interacting polymer network comprised of various organic polymers in order to confer specific biomolecule adsorption properties to the solid support materials or microbeads.

### Example 3:

### Preparation of titania (titanium oxide) microbeads with reduced pore volume

Microbeads were prepared as described in Example 1 except that silicon oxide solid irregular microparticles were replaced by titanium oxide fine powder (having particle sizes in the range of 0. 1- 10 µm). The resulting dried microbeads were then fired at 1200°C for 4 hours to reduce the initial pore volume (about 1/3 of bead volume) to about 15% of bead volume.

The density shown by these beads was about 3.5 g/cm³.

The resulting dense solid support materials or microbeads may be subsequently coated or filled with an interacting polymer network comprised of various organic polymers in order to confer specific biomolecule adsorption properties to the solid support materials or microbeads.

### Example 4:

### Preparation of hafnia (hafnium oxide)

### microbeads with reduced pore volume

Microbeads are prepared as described in Example 2 except that zircon fine powder is replaced by hafnium oxide fine powder. The dried microbeads obtained are then fired at 1400°C for 4 hours to reduce the initial pore volume (about 1/3 of bead volume) to about 10% of bead volume.

The density shown by these beads is about 8.5 g/cm³.

The resulting dense solid support materials or microbeads may be subsequently coated or filled with an interacting polymer network comprised of various organic polymers in order to confer specific biomolecule adsorption properties to the solid support materials or microbeads.

### Example 5:

### Preparation of tantalum oxide microbeads with reduced pore volume

Microbeads are prepared as described in Example 2 except that zircon fine powder is replaced by tantalum oxide fine powder. The dried microbeads obtained are then fired at 1400°C for 4 hours to reduce the initial pore volume (about 1/3 of bead volume) to about 10% of bead volume.

The density shown by these beads is about 7.2 g/cm³.

The resulting dense solid support materials or microbeads may be subsequently coated or filled with an interacting polymer network comprised of various organic polymers in order to confer specific biomolecule adsorption properties to the solid support materials or microbeads.

### Example 6:

### Preparation of zirconium oxide microbeads with reduced pore volume

Microbeads were prepared as described in Example 2 except that zircon fine powder was replaced by zirconium oxide fine powder (having particle sizes in the range of 0.1- 3 µm). The resulting dried microbeads were then fired at 1400°C for 4 hours to reduce the initial pore volume (about 1/3 of bead volume) to about 12% of bead volume.

The density shown by these beads was about 5.2 g/cm³.

The resulting dense solid support materials or microbeads may be subsequently coated or filled with an interacting polymer network comprised of various organic polymers in order to confer specific biomolecule adsorption properties to the solid support materials or microbeads.

### Example 7:

### Preparation of yttria (yttrium oxide) microbeads with reduced pore volume

Microbeads were prepared as described in Example 2 except that zircon powder was replaced by yttrium oxide fine powder (0.1-3 µm). The dried microbeads obtained were then fired at 1400°C for 4 hours to reduce the initial pore volume (about 1/3 of bead volume) to about 20% of bead volume.

The density shown by these beads was about 4.5 g/cm³.

The resulting dense solid support materials or microbeads may be subsequently coated or filled with an interacting polymer network comprised of various organic polymers in order to confer specific biomolecule adsorption properties to the solid support materials or microbeads.

### Example 8:

### Preparation of alumina (aluminum oxide) microbeads with reduced pore volume

Microbeads are prepared as described on Example 1 except that silicon oxide solid irregular microparticles are replaced by aluminum oxide fine powder. The resulting dried microbeads are then fired at 1400°C for 4 hours to reduce the initial pore volume (about 1/3 of bead volume) to about 20% of bead volume.

The density shown by these beads is about 3.5 g/cm³.

The resulting dense solid support materials or microbeads may be subsequently coated or filled with an interacting polymer network comprised of various organic polymers in order to confer specific biomolecule adsorption properties to the solid support materials or microbeads.

### Example 9:

### Preparation of highly dense microbeads with reduced pore volume composed of a mixture of tantalia and zirconia

Microbeads are prepared as described in Example 2 except that zircon fine powder is replaced by a 50%/50% mixture in weight of fine powders of tantalum oxide and zirconium oxide. The dried microbeads obtained are then fired at 1400°C for 4 hours to reduce the initial pore volume (about 1/3 of bead volume) to about 15% of bead volume.

The density shown by these beads is about 6.2 g/cm³.

The resulting dense solid support materials or microbeads may be subsequently coated or filled with an interacting polymer network comprised of various organic polymers in order to confer specific biomolecule adsorption properties to the solid support materials or microbeads.

### Example 10:

### Preparation of highly dense microbeads with reduced pore volume composed of a mixture of zirconia and hafnia

Microbeads are prepared as described in Example 9 except that the composition of the mixture of fine powders in weight is 50% zirconium oxide and 50% hafnium oxide fine powders. The dried microbeads obtained are then fired at 1400°C for 4 hours to reduce the initial pore volume (about 1/3 of bead volume) to about 25% of bead volume.

The density shown by these beads is about 7 g/cm³.

The resulting dense solid support materials or microbeads may be subsequently coated or filled with an interacting polymer network comprised of various organic polymers in order to confer specific biomolecule adsorption properties to the solid support materials or microbeads.

### Example 11:

### Preparation of collapsed porous mineral oxides microbeads by spray drying

The mineral oxide microparticles in suspension in a solution of sodium silicate as described above in Examples 1 to 10 above are used directly for the preparation of microbeads by spray drying. The suspension is injected into a vertical drying chamber through an atomization device, such as a revolving disk, a spray nozzle or an ultrasonic nebulizer, together with an hot gas stream, preferably air or nitrogen. The hot gas stream causes the rapid evaporation of water from the microdroplets. The hot gas stream is typically injected at a temperature of about 300°C to 350°C and exits the dryer at a temperature of slightly above 100°C.

Sodium silicate acts as a binder for the consolidation of individual aggregated mineral oxide microparticles. The dry microbeads obtained are then fired at a temperature which equals or exceeds the melting temperature of the mineral oxide(s) used to form the microbeads in order to irreversibly consolidate the mineral oxide network. This operation also results in the reduction of the pore volume of the beads to less than about thirty percent, and preferably to about 5% to 25% of the bead volume.

The densities of mineral oxide solid supports or microbeads obtained by spray drying methods are similar to those indicated on Examples 1 through 10.

The resulting dense solid support materials or microbeads may be subsequently coated or filled with an interacting polymer network comprised of various organic polymers in order to confer specific biomolecule adsorption properties to the solid support materials or microbeads.

### Example 12:

### Preparation of highly dense mineral oxide microbeads by spray drying with reduced pore volume

Microbeads are prepared according to Example 11 except that instead of sodium silicate solution, nitrates or sulfates of the same mineral oxide particles used to prepare the beads are used as the binder.

The resulting dense solid support materials or microbeads may be subsequently coated or filled with an interacting polymer network comprised of various organic polymers in order to confer specific biomolecule adsorption properties to the solid support materials or microbeads.

### Example 13:

### Preparation of highly dense microbeads with reduced pore volume and enhanced external surface area

Spherical beads which have a rough surface have a higher external surface area than smooth beads. This example describes a method of preparing solid support materials or microbeads according to the present invention having a rough surface.

Microbeads are prepared according to Examples 1 to 12 described above except that the initial mineral oxide microparticles or powder used in the aqueous slurry have particle sizes in the range of 3 µm to 15 µm. When small dense mineral oxide solid supports or microbeads are made according to any of the methods described herein using starting materials having large particle sizes, the resulting solid supports or microbeads have a very rough surface and the total external area is therefore increased.

Once these solid supports or microbeads are collapsed (by the firing or calcination step) and are provided with an interactive polymer network, *e.g.,* such as described in Examples 14 to 20 below, these solid support materials or microbeads show similar densities to the mineral oxide starting material used, and demonstrate increased binding capacity proportional to their external surface area. Typically, when the small dense mineral oxide solid supports or microbeads of the present invention are made with rough surfaces, the surface area as well as the binding capacities of the solid supports or microbeads are increased by about 5% to 30%.

### Example 14:

### Dextran coated highly dense zirconium oxide beads

A solution of 1N sodium hydroxide is slowly added to 13 ml of an aqueous solution of 10% dextran (10,000 daltons molecular weight) until a pH of 11.5 is obtained. Then, sodium carbonate is added up to the concentration of 0.2M, and the solution is cooled to 4°C. To the final mixture, 1% of butanedioldiglycidylether is added. The resulting solution is immediately added to 100 ml of settled small dense zirconium oxide microbeads having diameters in the range of 10 µm to 100 µm and a pore volume of about 12% of the total bead volume, such as those prepared in Example 6, in order to impregnate the microbeads with dextran.

The resulting impregnated microbeads are transferred into a closed vessel and heated at 85°C overnight. Under these conditions, the dextran solution is crosslinked in place rooted within the pores of the mineral oxide solid support, thereby filling the pores of the solid support media and creating a three dimensional interacting polymer network of dextran which is rooted in the pores and coats the external surface of the solid support materials or microbeads.

The resulting solid supports or microbeads contain about 0.25 (wt)% sugars, and can be used in classical chromatography media synthesis methods for the attachment of ion exchanger, hydrophobic, as well as affinity chemical groups.

### Example 15:

### Passivation of the surface of titania beads

Mineral oxide surfaces have innate hydroxyl groups as well as Lewis acid sites that are responsible for non-specific binding for biomolecules. The nature of these surfaces vary depending on the metal oxide and can be acidic, alkaline or both. In order to eliminate non-specific binding, special polymers can be used as passivating agents and stabilized irreversibly in place by a chemical crosslinking.

The surface of titanium oxide microbeads is almost alkaline and as a result will adsorb acidic proteins, for instance. In order to avoid non-specific binding of such molecules, passivation of the surface of these microbeads was accomplished by incubating the microbeads in 1 volume of an aqueous solution of hyaluronic acid, which is well known for its non-adhesive properties. After washing to eliminate excess hyaluronic acid, the microbeads were dried and incubated with 0.5 volume of a solution containing 1% butanedioldiglycidylether in ethanol and 10% of 1N sodium hydroxide. The suspension was incubated overnight, and then washed extensively. The resulting passivated titanium oxide solid supports or microbeads may be used for subsequent applications.

The resulting dense solid support materials or microbeads may be subsequently coated or filled with an interacting polymer network comprised of various organic polymers in order to confer specific biomolecule adsorption properties to the solid support materials or microbeads.

### Example 16:

### Highly dense mineral oxide beads with pore volume filled with agarose

An agarose solution is obtained by dispersing 4 grams of agarose powder in water at 60°C to 80°C under vigorous stirring. A clear solution is obtained by heating the solution in a boiling bath for about 20 to 30 minutes. The agarose solution has the property to form reversible strong gels when cooled below 40°C.

Mineral oxide (*e.g.*, hafnium oxide, zirconium oxide, titanium oxide, and the like) solid supports or microbeads, prepared as in Examples 1-13 and 15, are heated at about 150°C in a closed vessel, and then impregnated with a volume of the hot agarose solution, wherein the amount of hot agarose solution used roughly corresponds to 110% of the pore volume of the mineral oxide solid supports or microbeads. The resulting mixture is kept at 80-120°C for 1-2 hours, and then progressively cooled to room temperature. As a result, the agarose solution inside the pore volume of the microbeads and close to the surface of the microbeads is gelified and forms an organic, interactive polymer network which is ideal for the preparation of a large variety of derivatives for liquid chromatography using classically described chemical reactions.

### Example 17:

### Highly dense porous mineral oxide beads filled with cellulose.

A solution of cellulose triacetate is prepared by dispersion in acetone. The concentration of cellulose can typically be from 0.1 to 5% by weight. Other solvents well known to the skilled artisan can also be used for dissolving cellulose triacetate.

Mineral oxide (e.g., hafnium oxide, zirconia, titania, and the like) solid supports or microbeads, such as those prepared in Examples 1-13 and 15, are placed in a closed vessel and impregnated with a volume of cellulose triacetate solution, wherein the amount of cellulose triacetate solution used roughly corresponds to 110% of the pore volume of the mineral oxide solid supports or microbeads. The resulting mixture is stirred for 1-2 hours, and then the vessel is opened and the solvent evaporated slowly by an air stream.

Cellulose triacetate is deposited within the pore volume and the external surface area of the mineral oxide microbeads and forms an hydrophobic organic network. The cellulose triacetate is then turned into pure cellulose by mixing the solid phase (mineral oxide microbeads containing the cellulose derivative) with 0.5-2 M sodium hydroxide. The triacetate is hydrolyzed and cellulose is therefore regenerated. Cellulose is not soluble in aqueous environment, remains rooted inside the mineral oxide beads, and constitutes an ideal matrix for a number of derivatizations, such as the introduction of ion exchange groups or affinity or hydrophobic groups after appropriate chemical activation reactions well known to the skilled artisan are performed.

### Example 18:

### Immobilization of Concanavalin A on a highly dense agarose-zirconium oxide derivative.

Agarose-zirconium oxide solid supports or microbeads, prepared according to Examples 6 and 16, are first dried by repeated washings with dioxane to eliminate all traces of water. The dried microbeads are then drained and 10 grams of the drained cake of this material is suspended in 25 ml of pure dioxane and 1 gram of carbonyldiimidazole (CDI) is added. The resulting mixture is shaken for 4 hours at room temperature and then washed extensively with dioxane to eliminate the excess of reagents. The resulting CDI-activated material is mixed with 5 ml of 10 mg/ml Concanavalin A dissolved in 0.2 M carbonate buffer at pH 10. The mixture is gently agitated overnight and finally washed extensively with water and a 25 mM phosphate buffer containing 0.5M NaCl pH 7.2.

The resulting dense agarose-zirconium oxide solid supports or microbeads having Concanavalin A attached chemically on the surface show a binding capacity for ovalbumin of about 5 mg/ml

### Example 19 :

### Preparation of highly dense anion exchanger by filling polymerization

5 grams of dimethyl-acrylamide, 0.5 grams of N,N'-methylene-bis-methacrylamide and 5 grams of methacrylamidopropyltrimethyl-ammonium chloride are dissolved in 50 ml of dimethylsulfoxide. 50 ml of distilled water are added and mixed thoroughly, and then 0.2 grams of azo-bis-amidino-propane is added to the mixture. The resulting monomer solution is mixed with a given amount of a dry dense mineral oxide solid support or microbead prepared as in any of Examples 1-13 and 15, such that the amount of microbeads used corresponds to a porous volume of 100 ml, and the resulting mixture is mixed thoroughly and is placed in a closed vessel for 30-60 minutes.

The mixture is then heated for four hours at 70-90°C in order to initiate and complete polymerization of the monomer mixture. At the end of the polymerization reaction, the resulting dense ion exchanger solid supports or microbeads are washed extensively, and may be used for chromatographic separation or isolation of proteins.

The number of ionic groups per ml of microbeads is about 65 µmoles and the binding capacity for bovine serum albumin in classical conditions of ionic strength and pH is about 25 mg/ml.

### Example 20:

### Preparation of highly dense cation exchanger by filting polymerization

5 grams of dimethyl-acrylamide, 0.5 grams of N,N'-methylene-bis-methacrylamide and 5 grams of acrylamidomethyl-propane sulfonic acid sodium salt are dissolved in 50 ml of dimethylsulfoxide. 50 ml of distilled water are added and mixed thoroughly, and then 0.2 grams of azo-bis-amidino-propane is added to the mixture. The resulting monomer solution is mixed with a given amount of dry dense mineral oxide solid support or microbead prepared as in any of Examples 1-13 and 15, such that the amount of microbeads used corresponds to a porous volume of 90 ml, and the resulting mixture is mixed thoroughly and is placed in a closed vessel for 30-60 minutes.

The mixture is then heated for four hours at 70-90°C in order to initiate and complete polymerization of the monomer mixture. At the end of the polymerization reaction, the resulting dense ion exchanger or microbeads are washed extensively, and may be used for chromatographic separation or isolation of proteins.

The number of ionic groups per ml of microbeads is about 60 µmoles and the binding capacity for lysozyme in classical conditions of ionic strength and pH is about 35 mg/ml.

### Example 21:

### Measurement of binding capacity for a large protein of an anionic exchanger of different particle size

Anion exchanger solid supports are prepared according to Example 17, wherein the mineral oxide matrix comprises zirconium oxide having pore volume of about 12% of the bead volume. The density shown by these beads is about 5.2 g/cm³.

Various particle diameters of the resulting zirconium oxide solid supports having cellulose as the interactive polymer network are isolated by sieving; specifically, the particle diameters isolated are about 10µm, 20µm, 40µm, and 80 µm.

The binding capacities of these different size particles are measured for the large macromolecules thyroglobulin (mw 670,000 daltons) and a 10 kb plasmid. Binding capacity is measured by breakthrough ("BT") curve method and calculations made at 10% breakthrough.

| Binding capacity at 10% BT (mg/ml) for different particle sizes and two macromolecules: | | | | |
|---|---|---|---|---|
| | **10 µm particles** | **20 µm particles** | **40 µm particles** | **80 µm particles** |
| **Thyroglobulin** | 60 mg/ml | 27 mg/ml | 15 mg/ml | 8 mg/ml |
| **Plasmid** | 13 mg/ml | 5.8 mg/ml | 2.5 mg/ml | 1.8 mg/ml |

Binding capacity of the dense mineral oxide supports or microbeads of the present invention is believed to be dependent on the particle size, and it is believed that binding is essentially displayed on the surface of these solid supports or microbeads.

### Example 22:

### Fluidization properties of various porous dense microspheres of mineral oxides

Three types of mineral oxide beads are prepared according to the procedure described in Example 12.

Specifically, a sodium silicate solution is prepared by mixing 150 grams of a 35% commercial silicate solution in 400 ml of distilled water. Similarly, a titanyl sulfate solution is prepared by mixing 30 grams of titanyl sulfate in 400 ml of distilled water, and a zirconyl nitrate solution is prepared by mixing 150 grams of a 20% zirconyl nitrate solution in 400 ml of distilled water.

273 grams of dry solid irregular silicon oxide (having particle sizes in the range of 0.3-5 µm) are then added to the sodium silicate solution under gentle stirring to prevent the introduction of air bubbles. Similarly, 275 grams of titanium oxide fine powder (having particle sizes in the range of 0.1- 10 µm) are added to the titanyl sulfate solution under gentle stirring, and 275 grams of zirconium oxide fine powder (having particle sizes in the range of 0.1-3 µm) are added to the zirconyl nitrate solution under gentle stirring.

The resulting suspensions are then each independently injected into a Sodeva Atselab spray dryer (commercially available from Sodeva, Le bouget du Lac, France), together with a hot air stream. The hot air stream is injected concurrently with the suspension into the vertical drying chamber at a temperature of about 350°C, and exits the drying chamber at a temperature of about 98°C.

Each of the three types of dried mineral oxide microbeads obtained with this methodology are then calcined at 1400°C for 4 hours to reduce the pore volume to about 10-15% of the bead volume.

The mean particle diameter of the resulting mineral oxide solid supports or microbeads is measured by laser-diffraction spectrometry (Malvern particle sizer).

The fluidization behaviors of the different particles are investigated in a 2.5 ID classical fluidized bed column, using distilled water as the mobile phase. The velocity which allows a two time bed expansion of the bed of each type of mineral oxide solid supports or microbeads prepared as indicated above are as follow:

| **materials** | **SiO**_{**2**} | **TiO**_{**2**} | **ZrO**_{**2**} |
|---|---|---|---|
| **mean particle diameter (µm)** | 65 | 60 | 65 |
| **specific density (g/cm**^{**3**}**)** | 1.78 | 2.9 | 4.6 |
| **linear velocity (cm/h) at 2 time bed expansion** | 136 | 285 | 630 |

Increased density positively impacts the operating velocity at a two times bed expansion. This has a beneficial effect on the column productivity and furthermore decreases the risks associated with the denaturation of biological material.

### Example 23:

### Capture of IgM from a serum fraction using a Concanavalin A derivative of highly dense zirconium oxide microbeads

20 grams of highly dense Concanavalin A-agarose-zirconium oxide solid supports or microbeads, prepared according to Examples 6, 16 and 18, are mixed with 50 ml of 50 mM Tris-HCl buffer pH 7.8, containing 2 mM MnCl₂.

In parallel, 200 ml of frozen human plasma or serum sample are thawed and filtered to eliminate cryoprecipitate. Large proteins are precipitated from the sample by adding pure ethanol up to a final concentration of 15% in volume. After agitating for about 20 minutes at room temperature, the precipitate is recovered by centrifugation and dissolved in 1 liter of 50 mM Tris-HCl buffer pH 7.8, containing 2 mM MnCl₂.

The resulting sample solution, which is not completely clear and contains some material which does not dissolve, is introduced into a fluid bed device already loaded with the microbead suspension equilibrated in 50 mM Tris-HCl buffer pH 7.8, 2 mM MnCl₂. An upward buffer flow which maintains the beads at a 2 times bed expansion is applied. Once the sample has been completely supplied to the device, a 50 mM Tris-HCl pH 7.8, 2 mM MnCl₂ buffer is introduced to wash out all insoluble particles, and then non-specifically adsorbed materials are eluted by adding 0.5 M sodium chloride to the washing buffer.

IgM, which are known for their affinity for Concanavalin A (the glycosylated moiety of IgM interacts specifically with Concanavalin A), are selectively desorbed from the solid supports or microbeads by replacing the washing buffer with an elution buffer composed of 50 mM Tris-HCl buffer pH7.8, 2 mM MnCl₂ and 20 mM of α-methyl-glucopyranoside. After collection of the IgM is completed, the column is then equilibrated with the initial buffer, *i.e.,* 50 mM Tris-HCl buffer pH 7.8, 2 mM MnCl₂ and then can be reused for another separation cycle.

### Example 24:

### Hepatitis B virus capture using a Cibacron Blue derivative of highly dense Titanium oxide microbeads

20 grams of highly dense agarose-titanium oxide solid supports or microbeads, prepared according to Examples 3 and 16, are suspended in 50 ml of 50 mM carbonate buffer pH 11.5 containing 0.5 M sodium chloride. To this suspension 2 grams of Cibacron Blue 3GA (a triazine reactive dye known for its affinity for Hepatitis B virus, commercially available from Sigma Chemicals, St. Louis, Missouri, USA) are added and the suspension is shaken overnight at room temperature. The suspension is then heated at 60°C for about an hour, and then the suspension washed extensively to eliminate any excess of Cibacron Blue 3 GA dye molecules.

The resulting slurry is introduced into a fluid bed device of 2.5 cm diameter and continuously maintained in suspension by an upward flow of a phosphate buffered saline. A human immunoglobulin sample solution containing hepatitis B viruses in physiological buffer is then introduced into the column from the bottom at a linear velocity which maintains the solid supports or microbeads in fluidized state. Viruses are captured by the Cibacron Blue functionalized agarose-titanium oxide solid supports or microbeads, while the virus-depleted immunoglobulin sample solution is collected from the top of the column. The Cibacron Blue functionalized agarose-titania solid supports or microbeads are then washed with sodium hydroxide and other sterilizing solutions so as to eliminate and inactivate the adsorbed viruses, and then reequilibrated with the initial loading buffer such that other separation cycles may be performed.

Virus clearance according to this example can be on the order of about 4 logs.

### Example 25:

### Capture of plasmids from a E. coli crude extract using a quaternary amino derivative of highly dense zirconium oxide microbeads

50 grams of highly dense anion exchanger-zirconium oxide solid supports or microbeads, prepared according to Examples 6 and 19, are suspended in 100 ml of 50 mM Tris-HCl, 500 mM NaCl buffer pH 8.5 and introduced into a fluid bed column of 25 mm diameter and maintained in suspension by an upward flow at a speed high enough to prevent microbeads from settling and maintains the microbeads in a fluidized state.

In parallel an *E*.*coli* lysate obtained using classical alkaline-SDS treatment (0.2 MNaOH, 1%-SDS) is subject to various alcoholic precipitations (Green *et al*., "Preparative purification of supercoiled plasmid DNA for therapeutic applications," *Biopharm*, pp. 52-62 (May 1997)) in order to eliminate proteins, is diafiltered against 50 mM Tris HCl, 500 mM NaCl pH 8.5 buffer and the resulting lysate sample is introduced into the column from the bottom end, at the same linear velocity which prevents the microbeads from settling and maintains the microbeads in a fluidized state.

The dense microbeads in suspended in the fluidized bed adsorb most of nucleic acid molecules in the lysate sample, except for small fragments. The fluid bed suspension is then washed with the same working buffer in order to eliminate unbound contaminants. Then, a 50 mM Tris-HCl pH 8.5 buffer containing 680 mM NaCl is used to wash out RNA molecules. Thereafter, plasmid molecules are specifically eluted in fluidized bed mode, by increasing the NaCl concentration in the buffer to 1000 mM. Finally, strongly bound contaminants, such as genomic DNA, are desorbed from the microbeads by cleaning in the fluid mode using an 0.5 M sodium hydroxide solution. The column is then reequilibrated with 50 mM Tris-HCl, 500 mM NaCl buffer pH 8.5 such that another cycle may be performed.

The purity of the plasmids obtained with this fluid bed process is comparable to that obtained using a similar cationic solid phase packed in a fixed bed column. However, in the present example, elution is easier since in fluid bed mode the viscosity of the plasmid sample does not limit the flow rate of the column, as is the case in a packed bed mode.

## Claims

1. Mineral oxide solid supports having a density in the range of 1.7 to 11 g/cm³ and particle size in the range of 10 µm to 100 µm, and comprising:
a) a mineral oxide matrix having an external surface and pores wherein the pores have a pore volume which is 5% to 25% of the total volume of the mineral oxide matrix; and
b) an interactive polymer network which is rooted in the pores and is layered on the external surface of the mineral oxide matrix so that subsequent interaction with macromolecules occurs on the external surface area of the support.

2. The mineral oxide solid supports of claim 1, wherein the density is in the range of 2.1 to 10 g/cm³.

3. The mineral oxide solid supports of claim 1, wherein the density is 2.1 to 11 g/cm³.

4. The mineral oxide solid supports of any one of the preceding claims, wherein the pore volume is 5% to 15%.

5. The mineral oxide solid supports of any one of the preceding claims, wherein the mineral oxide matrix is comprised of titania, zirconia, yttria, ceria, hafnia, tantalia, or mixtures thereof.

6. The mineral oxide solid supports of any one of the preceding claims, wherein the interactive polymer network comprises a soluble organic polymer or a mixture of soluble organic polymers crosslinked in place with the mineral oxide matrix.

7. The mineral oxide solid supports of claim 6, wherein the soluble organic polymer is a polysaccharide or a mixture of polysaccharides.

8. The mineral oxide solid supports of claim 7, wherein the polysaccharide is selected from agarose, dextran, cellulose, chitosan, a glucosaminoglycan, and derivatives thereof.

9. The mineral oxide solid supports of Claim 6, wherein the soluble organic polymer is a linear soluble organic polymer selected from polyvinyl alcohol, a polyethyleneimine, a polyvinylamine, polyvinylpyrrolidone, a polyethyleneglycol, a polyaminoacid, a nucleic acid, and derivatives thereof.

10. The mineral oxide solid supports of any one of claims 1 to 5, wherein the interactive polymer network comprises monomers, bifunctional monomers, or mixtures thereof copolymerized in place with the mineral oxide matrix.

11. The mineral oxide solid supports of claim 10, wherein the monomers are selected from:
(a) aliphatic ionic, non-ionic, and reactive derivatives of acrylic, methacrylic, vinylic, and allylic compounds;
(b) aromatic ionic, non-ionic, and reactive derivatives of acrylic, methacrylic, vinylic, and allylic compounds;
(c) heterocyclic ionic, non-ionic, and reactive derivatives of acrylic, methacrylic, vinylic, and allylic compounds; and
(d) mixtures of any of the monomers in (a), (b) or (c).

12. The mineral oxide solid supports of claim 11, wherein (a) is acrylamide, dimethylacrylamide, trisacryl, acrylic acid, acryloylglycine, diethylaminoethyl methacrylamide, vinylpyrrolidone, vinylsulfonic acid, allylamine, allylglycydylether, or derivatives thereof.

13. The mineral oxide solid supports of claim 11 or 12, wherein (b) is vinyltoluene, phenylpropylacrylamide, trimethylaminophenylbutylmethacrylate; tritylacrylamide, or derivatives thereof.

14. The mineral oxide solid supports of any one of claims 11 to 13, wherein (c) is vinylimidazole, vinylpyrrolidone, acryloylmorpholine, or derivatives thereof.

15. The mineral oxide solid supports of claim 10, wherein the bifunctional monomers are selected:
(a) bisacrylamides;
(b) bis-methacrylamides;
(c) bis-acrylates;
(d) ethyleneglycol-methacrylates; and
(e) diallyltartradiamide.

16. The mineral oxide solid supports of claim 15, wherein (a) is N,N'-methylene-bis-acrylamide, N,N'-ethylene-bis-acrylamide, N,N'-hexamethylene-bis-acrylamide, or glyoxal-bis-acrylamide.

17. The mineral oxide solid supports of claim 15, wherein (b) is N,N'-methylene-bis-methacrylamide, N,N'-ethylene-bis-methacrylamide, or N,N-hexamethylene-bis-methacrylamide.

18. The mineral oxide solid supports of claim 15, wherein (c) is diethylglycoldiacrylate, diethylglycolmethacrylate, ethyleneglycoldiacrylate, or ethyleneglycoldimethacrylate.

19. A method of separating a target molecule by solid phase adsorption comprising passing a sample containing said target molecule through a chromatography device loaded with a solid phase matrix comprising mineral oxide solid supports as defined in any one of the preceding claims.

20. The method of claim 19, wherein the target molecule is a biological molecule.

21. The method of claim 20 comprising:
(a) loading a chromatography device with a chromatography bed comprised of said mineral oxide solid supports, wherein the interactive polymer network is functionalized to have affinity for the desired biological molecule;
b) feeding the sample solution containing a desired biological molecule into the chromatography device, whereby the desired biological molecule is adsorbed to the mineral oxide solid supports;
c) washing the chromatography device with a washing buffer and discharging undesired components and impurities of the sample solution from the chromatography device;
d) feeding an eluting buffer into the chromatography device, wherein said eluting buffer causes the desired biological molecule to be released from the mineral oxide solid supports; and
e) collecting the desired biological molecule.

22. The method of claim 21, wherein the chromatography device is a packed bed column, a fluidized bed column, or a continuous stirred tank.

23. The method of claim 22, comprising
a) loading a fluidized bed column with a chromatography bed comprised of said mineral oxide solid supports, wherein the interactive polymer network is functionalized to have affinity for the desired biological molecule;
b) feeding an initial buffer into said fluidized bed column at a linear velocity which causes the mineral oxide solid supports to form a fluidized bed;
c) feeding the sample solution containing said desired biological molecule into the fluidized bed column at a linear velocity which maintains the mineral oxide solid supports in the fluidized bed, whereby the desired biological molecule is adsorbed to the mineral oxide solid supports;
d) washing the chromatography device with a washing buffer and discharging undesired components and impurities of the sample solution from the fluidized bed column device;
e) feeding an elution buffer into the fluidized bed column, wherein said elution buffer causes the desired biological molecule to be released from the mineral oxide solid supports; and
f) collecting the desired biological molecule eluted from the fluidized bed column.

24. The method of claim 23, wherein the linear velocity is within the range of 100 cm/hour to 3000 cm/hour.

25. The method of claim 21-24, wherein the desired biological molecule is a polysaccharide, a plasmid, a nucleic acid, or a protein aggregate.

26. The method of any one of claims 21 to 24, wherein the desired biological molecule is a bioparticle.

27. The method of claim 26, wherein the bioparticle is a virus, a viral vector, a membrane protein, or a cellular structure.

28. A method for preparing mineral oxide solid supports as defined in claim 1, which method comprises:
(a) preparing a mixture of particles of at least one mineral oxide;
(b) forming a mineral oxide matrix from said mixture;
(c) sintering the resulting mineral oxide matrix at a high temperature which melts subparticles in the mineral oxide matrix, wherein the sintering reduces the pore volume of the mineral oxide matrix to 5% to 25% of the total volume of the mineral oxide matrix; and
(d) forming an interactive polymer network rooted in the pores and layered on the surface of the resulting sintered mineral oxide matrix.

29. The method of claim 28, wherein the mineral oxide is selected from titania, zirconia, yttria, ceria, hafnia, tantalia, or mixtures thereof

30. The method of claim 28 or 29, wherein the particles of mineral oxide have a particle size of in the range of 0.1 µm to 15 µm.

31. The method of claim 30, wherein the particles of mineral oxide have a particle size of 0.1 µm to 3 µm.

32. The method of claim 28 or 29, wherein the dense mineral oxide solid supports have a rough surface, and wherein the particles of mineral oxide have a particle size of 3 µm to 15 µm.

33. The method of any one of claims 28 to 32, wherein the beads are formed by a sol-gel process, a spray drying process, or an emulsion-polycondensation process.

34. The method of any one of claims 28 to 33, wherein the interactive polymer network is comprised of monomers, bifunctional monomers, or mixtures thereof copolymerized in place with the mineral oxide matrix.

35. The method of any one of claims 28 to 33, wherein the interactive polymer network is comprised of a soluble organic polymer or a mixture of soluble organic polymers crosslinked in place with the mineral oxide matrix.

## Patentansprüche

1. Mineraloxid-Feststoffträger mit einer Dichte im Bereich von 1,7 bis 11 g/cm³ und einer Teilchengröße im Bereich von 10 µm bis 100 µm, und umfassend:
a) eine Mineraloxidmatrix mit einer äußeren Oberfläche und Poren, wobei die Poren ein Porenvolumen, das 5% bis 25% des Gesamtvolumens der Mineraloxidmatrix ausmacht, aufweisen; und
b) ein interaktives Polymemetzwerk, das in den Poren verwurzelt ist und auf der äußeren Oberfläche der Mineraloxidmatrix so aufgeschichtet ist, dass die anschließende Wechselwirkung mit Makromolekülen auf dem äußeren Oberflächenbereich des Trägers stattfindet.

2. Mineraloxid-Feststoffträger nach Anspruch 1, wobei die Dichte im Bereich von 2,1 bis 10 g/cm³ liegt.

3. Mineraloxid-Feststoffträger nach Anspruch 1, wobei die Dichte 2,1 bis 11 g/cm³ beträgt.

4. Mineraloxid-Feststoffträger nach mindestens einem der vorausgehenden Ansprüche, wobei das Porenvolumen 5% bis 15% beträgt.

5. Mineraloxid-Feststoffträger nach mindestens einem der vorausgehenden Ansprüche, wobei die Mineraloxidmatrix aus Titanoxid, Zirkonoxid, Yttriumoxid, Ceroxid, Hafniumoxid, Tantaloxid oder Mischungen davon besteht.

6. Mineraloxid-Feststoffträger nach mindestens einem der vorausgehenden Ansprüche, wobei das interaktive Polymernetzwerk ein lösliches organisches Polymer oder eine Mischung von löslichen organischen Polymeren, an Ort und Stelle vernetzt mit der Mineraloxidmatrix, umfasst.

7. Mineraloxid-Feststoffträger nach Anspruch 6, wobei das lösliche organische Polymer ein Polysaccharid oder eine Mischung von Polysacchariden ist.

8. Mineraloxid-Feststoffträger nach Anspruch 7, wobei das Polysaccharid aus Agarose, Dextran, Cellulose, Chitosan, einem Glucosaminoglycan und Derivaten hiervon gewählt ist.

9. Mineraloxid-Feststoffträger nach Anspruch 6, wobei das lösliche organische Polymer ein lineares lösliches organisches Polymer ist, gewählt aus Polyvinylalkohol, einem Polyethylenimin, einem Polyvinylamin, Polyvinylpyrrolidon, einem Polyethylenglycol, einer Polyaminosäure, einer Nukleinsäure und Derivaten hiervon.

10. Mineraloxid-Feststoffträger nach mindestens einem der vorausgehenden Ansprüche 1 bis 5, wobei das interaktive Polymemetzwerk Monomere, bifunktionelle Monomere oder Mischungen davon, an Ort und Stelle copolymerisiert mit der Mineraloxidmatrix, umfasst.

11. Mineraloxid-Feststoffträger nach Anspruch 10, wobei die Monomere gewählt werden aus:
(a) aliphatischen ionischen, nicht-ionischen und reaktiven Derivaten von Acryl-, Methacryl-, Vinyl- und Allylverbindungen;
(b) aromatischen ionischen, nicht-ionischen und reaktiven Derivaten von Acryl-, Methacryl-, Vinyl- und Allylverbindungen;
(c) heterocyclischen ionischen, nicht-ionischen und reaktiven Derivaten von Acryl-, Methacryl-, Vinyl- und Allylverbindungen; und
(d) Mischungen von jedweden der Monomeren in (a), (b) oder (c).

12. Mineraloxid-Feststoffträger nach Anspruch 11, wobei (a) Acrylamid, Dimethylacrylamid, Trisacryl, Acrylsäure, Acryloylglycin, Diethylaminoethylmethacrylamid, Vinylpyrrolidon, Vinylsulfonsäure, Allylamin, Allylglycydylether oder Derivate hiervon ist.

13. Mineraloxid-Feststoffträger nach Anspruch 11 oder 12, wobei (b) Vinyltoluol, Phenylpropylacrylamid, Trimethylaminophenylbutylmethacrylat, Tritylacrylamid oder Derivate davon ist.

14. Mineraloxid-Feststoffträger nach mindestens einem der Ansprüche 11 bis 13, wobei (c) Vinylimidazol, Vinylpyrrolidon, Acryloylmorpholin oder Derivate hiervon ist.

15. Mineraloxid-Feststoffträger nach Anspruch 10, wobei die bifunktionellen Träger gewählt werden aus:
(a) Bisacrylamiden;
(b) Bismethacrylamiden;
(c) Bisacrylaten;
(d) Ethylenglycolmethacrylaten; und
(e) Diallyltartradiamid.

16. Mineraloxid-Feststoffträger nach Anspruch 15, wobei (a) N,N'-Methylen-bisacrylamid, N,N'-Ethylen-bis-acrylamid, N,N'-Hexamethylen-bis-acrylamid oder Glyoxal-bis-acrylamid ist.

17. Mineraloxid-Feststoffträger nach Anspruch 15, wobei (b) N,N'-Methylen-bismethacrylamid, N,N'-Ethylen-bis-methacrylamid oder N,N-Hexamethylen-bismethacrylamid ist.

18. Mineraloxid-Feststoffträger nach Anspruch 15, wobei (c) Diethylglycoldiacrylat, Diethylglycolmethacrylat, Ethylenglycoldiacrylat oder Ethylenglycoldimethacrylat ist.

19. Verfahren zur Trennung eines Zielmoleküls durch Festphasen-Adsorption, umfassend das Hindurchleiten einer Probe, enthaltend das Zielmolekül, durch eine Chromatographie-Vorrichtung, beladen mit einer Festphasenmatrix, umfassend Mineraloxid-Feststoffträger, wie definiert in mindestens einem der vorausgehenden Ansprüche.

20. Verfahren von Anspruch 19, wobei das Zielmolekül ein biologisches Molekül ist.

21. Verfahren von Anspruch 20, umfassend:
a) Beladen einer Chromatographievorrichtung mit einem Chromatographie-Bett, bestehend aus den Mineraloxid-Feststoffträgem, wobei das interaktive Polymernetzwerk funktionalisiert ist, um Affinität für das gewünschte biologische Molekül aufzuweisen:
b) Zuführen der Probenlösung, enthaltend ein gewünschtes biologisches Molekül, in die Chromatographievorrichtung, wodurch das gewünschte biologische Molekül an die Mineraloxid-Feststoffträger adsorbiert wird;
c) Waschen der Chromatographievorrichtung mit einem Waschpuffer und Abführen unerwünschter Komponenten und Verunreinigungen der Probenlösung aus der Chromatographievorrichtung;
d) Zuführen eines Elutionspuffers in die Chromatographievorrichtung, wobei der Elutionspuffer die Freisetzung des gewünschten biologischen Moleküls von den Mineraloxid-Feststoffträgem verursacht; und
e) Auffangen des gewünschten biologischen Moleküls.

22. Verfahren nach Anspruch 21, wobei die Chromatographievorrichtung eine Füllkörpersäule, eine Fließbettsäule oder ein kontinuierlich gerührter Tank ist.

23. Verfahren von Anspruch 22, umfassend
a) Beladen einer Fließbettsäule mit einem Chromatographie-Bett, bestehend aus den Mineraloxid-Feststoffträgem, wobei das interaktive Polymernetzwerk funktionalisiert ist, um Affinität für das gewünschte biologische Molekül aufzuweisen;
b) Zuführen eines Anfangspuffers in die Fließbettsäule bei einer linearen Geschwindigkeit, welche verursacht, dass die Mineraloxid-Feststoffträger ein Fließbett bilden;
c) Zuführen der Probenlösung, enthaltend das gewünschte biologische Molekül, in die Fließbettsäule bei einer linearen Geschwindigkeit, welche die Mineraloxid-Feststoffträger im Fließbett hält, wodurch das gewünschte biologische Molekül an die Mineraloxid-Feststoffträger adsorbiert wird;
d) Waschen der Chromatographievorrichtung mit einem Waschpuffer und Abführen unerwünschter Komponenten und Verunreinigungen der Probenlösung aus der Fließbettsäulen-Vorrichtung;
e) Zuführen eines Elutionspuffers in die Fließbettsäule, wobei der Elutionspuffer die Freisetzung des gewünschten biologischen Moleküls von den Mineraloxid-Feststoffträgem verursacht; und
f) Auffangen des aus der Fließbettsäule eluierten gewünschten biologischen Moleküls.

24. Verfahren von Anspruch 23, wobei die lineare Geschwindigkeit innerhalb des Bereichs von 100 cm/h bis 3000 cm/h liegt.

25. Verfahren von Anspruch 21-24, wobei das gewünschte biologische Molekül ein Polysaccharid, ein Plasmid, eine Nukleinsäure oder ein Proteinaggregat ist.

26. Verfahren nach mindestens einem der Ansprüche 21 bis 24, wobei das gewünschte biologische Molekül ein Biopartikel ist.

27. Verfahren nach Anspruch 26, wobei das Biopartikel ein Virus, ein viraler Vektor, ein Membranprotein oder eine zelluläre Struktur ist.

28. Verfahren zur Herstellung von Mineraloxid-Feststoffträgern, wie definiert in Anspruch 1, wobei das Verfahren umfasst:
(a) Herstellen einer Mischung von Teilchen von mindestens einem Mineraloxid;
(b) Bilden einer Mineraloxidmatrix aus der Mischung;
(c) Sintern der resultierenden Mineraloxidmatrix bei einer hohen Temperatur, die Subpartikel in der Mineraloxidmatrix schmilzt, wobei das Sintern das Porenvolumen der Mineraloxidmatrix auf 5% bis 25% des Gesamtvolumens der Mineraloxidmatrix reduziert; und
(d) Bilden eines interaktiven Polymernetzwerks, das in den Poren verwurzelt ist und auf der Oberfläche der resultierenden gesinterten Mineraloxidmatrix aufbeschichtet ist.

29. Verfahren nach Anspruch 28, wobei das Mineraloxid gewählt ist aus Titanoxid, Zirkonoxid, Yttriumoxid, Ceroxid, Hafniumoxid, Tantaloxid oder Mischungen davon.

30. Verfahren nach Anspruch 28 oder 29, wobei die Teilchen des Mineraloxids eine Teilchengröße im Bereich von 0,1 µm bis 15 µm besitzen.

31. Verfahren von Anspruch 30, wobei die Teilchen des Mineraloxids eine Teilchengröße von 0,1 µm bis 3 µm besitzen.

32. Verfahren nach Anspruch 28 oder 29, wobei die dichten Mineraloxid-Feststoffträger eine rauhe Oberfläche aufweisen und wobei die Teilchen des Mineraloxids eine Teilchengröße von 3 µm bis 15 µm besitzen.

33. Verfahren nach mindestens einem der Ansprüche 28 bis 32, wobei die Perlen durch ein Sol-Gel-Verfahren, ein Sprühtrocknungs-Verfahren oder ein Emulsions-Polykondensations-Verfahren gebildet werden.

34. Verfahren nach mindestens einem der Ansprüche 28 bis 33, wobei das interaktive Polymernetzwerk aus Monomeren, bifunktionellen Monomeren oder Mischungen davon, copolymerisiert an Ort und Stelle mit der Mineraloxidmatrix, besteht.

35. Verfahren nach mindestens einem der Ansprüche 28 bis 33, wobei das interaktive Polymernetzwerk aus einem löslichen organischen Polymer oder einer Mischung von löslichen organischen Polymeren, vemetzt an Ort und Stelle mit der Mineraloxidmatrix, besteht.

## Revendications

1. Supports solides d'oxyde minéral ayant une masse volumique dans la gamme de 1,7 à 11 g/cm³ et une taille de particule dans la gamme de 10 µm à 100 µm, et comprenant :
a) une matrice d'oxyde minéral ayant une surface externe et des pores, dans laquelle les pores ont un volume poreux qui représente 5 à 25 % du volume total de la matrice d'oxyde minéral ; et
b) un réseau polymère interactif qui est ancré dans les pores et est stratifié sur la surface externe de la matrice d'oxyde minéral de sorte qu'une interaction subséquente avec des macromolécules se produit sur l'aire de surface externe du support.

2. Supports solides d'oxyde minéral selon la revendication 1, dans lesquels la masse volumique est dans la gamme de 2,1 à 10 g/cm³.

3. Supports solides d'oxyde minéral selon la revendication 1, dans lesquels la masse volumique est de 2,1 à 11 g/cm³.

4. Supports solides d'oxyde minéral selon l'une quelconque des revendications précédentes, dans lesquels le volume poreux est 5% à 15 %.

5. Supports solides d'oxyde minéral selon l'une quelconque des revendications précédentes, dans lesquels la matrice d'oxyde minéral est composée d'oxyde de titane, de zircone, d'oxyde d'yttrium, d'oxyde cérique, d'oxyde de hafnium, d'oxyde de tantale, ou de mélanges de ceux-ci.

6. Supports solides d'oxyde minéral selon l'une quelconque des revendications précédentes, dans lesquels le réseau polymère interactif comprend un polymère organique soluble ou un mélange de polymères organiques solubles réticulés en place avec la matrice d'oxyde minéral.

7. Supports solides d'oxyde minéral selon la revendication 6, dans lesquels le polymère organique soluble est un polysaccharide ou un mélange de polysaccharides.

8. Supports solides d'oxyde minéral selon la revendication 7, dans lesquels le polysaccharide est choisi parmi l'agarose, le dextrane, la cellulose, le chitosane, un glucosaminoglycane et des dérivés de ceux-ci.

9. Supports solides d'oxyde minéral selon la revendication 6, dans lesquels le polymère organique soluble est un polymère organique soluble linéaire choisi parmi un alcool polyvinylique, une polyéthylèneimine, une polyvinylamine, une polyvinylpyrrolidone, un polyéthylèneglycol, un polyaminoacide, un acide nucléique et des dérivés de ceux-ci.

10. Supports solides d'oxyde minéral selon l'une quelconque des revendications 1 à 5, dans lesquels le réseau polymère interactif comprend des monomères, des monomères bifonctionnels ou des mélanges de ceux-ci copolymérisés en place avec la matrice d'oxyde minéral.

11. Supports solides d'oxyde minéral selon la revendication 10, dans lesquels les monomères sont choisis parmi :
(a) les dérivés aliphatiques ioniques, non ioniques et réactifs de composés acryliques, méthacryliques, vinyliques et allyliques ;
(b) les dérivés aromatiques ioniques, non ioniques et réactifs de composés acryliques, méthacryliques, vinyliques et allyliques ;
(c) les dérivés hétérocycliques ioniques, non ioniques et réactifs de composés acryliques, méthacryliques, vinyliques et allyliques ; et
(d) des mélanges de tous monomères de (a), (b) ou (c).

12. Supports solides d'oxyde minéral selon la revendication 11, dans lesquels (a) est l'acrylamide, le diméthylacrylamide, le trisacryle, l'acide acrylique, l'acryloylglycine, le diéthylaminoéthyl méthacrylamide, la vinylpyrrolidone, l'acide vinylsulfonique, l'allylamine, l'éther allylglycidylique ou des dérivés de ceux-ci.

13. Supports solides d'oxyde minéral selon la revendication 11 ou 12, dans lesquels (b) est le vinyltoluène, le phénylpropylacrylamide, le méthacrylate de triméthylaminophénylbutyle ; le tritylacrylamide, ou des dérivés de ceux-ci.

14. Supports solides d'oxyde minéral selon l'une quelconque des revendications 11 à 13, dans lesquels (c) est le vinylimidazole, la vinylpyrrolidone, l'acryloylmorpholine ou des dérivés de ceux-ci.

15. Supports solides d'oxyde minéral selon la revendication 10, dans lesquels les monomères bifonctionnels sont choisis ;
(a) bisacrylamides ;
(b) bis-méthacrylamides ;
(c) bis-acrylates ;
(d) méthacrylates d'éthylèneglycol ; et
(e) diallyltartradiamide.

16. Supports solides d'oxyde minéral selon la revendication 15, dans lesquels (a) est le N,N'-méthylène-bis-acrylamide, le N,N'-éthylène-bis-acrylamide, le N,N'-hexaméthylène-bis-acrylamide ou le glyoxal-bis-acrylamide.

17. Supports solides d'oxyde minéral selon la revendication 15, dans lesquels (b) est le N,N'-méthylène-bis-méthacrylamide, le N,N'-éthylène-bis-méthacrylamide ou le N,N-hexaméthylène-bis-méthacrylamide.

18. Supports solides d'oxyde minéral selon la revendication 15, dans lesquels (c) est le diacrylate de diéthylglycol, le méthacrylate de diéthylglycol, le diacrylate d'éthylèneglycol ou le diméthacrylate d'éthylèneglycol.

19. Procédé de séparation d'une molécule cible par adsorption sur phase solide, comprenant le fait de faire passer un échantillon contenant ladite molécule cible à travers un dispositif de chromatographie chargé avec une matrice en phase solide comprenant des supports solides d'oxyde minéral tels que définis dans l'une quelconque des revendications précédentes.

20. Procédé selon la revendication 19, dans lequel la molécule cible est une molécule biologique.

21. Procédé selon la revendication 20, comprenant :
(a) le chargement d'un dispositif de chromatographie avec un lit de chromatographie composé desdits supports solides d'oxyde minéral, dans lequel le réseau polymère interactif est fonctionnalisé pour avoir de l'affinité pour la molécule biologique souhaitée ;
b) l'introduction de la solution d'échantillon contenant une molécule biologique souhaitée dans le dispositif de chromatographie, de sorte que la molécule biologique souhaitée est adsorbée sur les supports solides d'oxyde minéral ;
c) le lavage du dispositif de chromatographie avec un tampon de lavage et le rejet des constituants indésirables et des impuretés de la solution d'échantillon à partir du dispositif de chromatographie ;
d) l'introduction d'un tampon d'élution dans le dispositif de chromatographie, dans laquelle ledit tampon d'élution provoque la libération de la molécule biologique souhaitée à partir des supports solides d'oxyde minéral ; et
e) la collecte de la molécule biologique souhaitée.

22. Procédé selon la revendication 21, dans lequel le dispositif de chromatographie est une colonne à lit tassé, une colonne à lit fluidisé ou un bac sous agitation continue.

23. Procédé selon la revendication 22, comprenant
a) le chargement d'une colonne à lit fluidisé avec un lit de chromatographie composé desdits supports solides d'oxyde minéral, dans lequel le réseau polymère interactif est fonctionnalisé pour avoir de l'affinité pour la molécule biologique souhaitée ;
b) l'introduction d'un tampon initial dans ladite colonne à lit fluidisé à une vitesse linéaire qui fait que les supports solides d'oxyde minéral forment un lit fluidisé ;
c) l'introduction de la solution d'échantillon contenant ladite molécule biologique souhaitée dans la colonne à lit fluidisé à une vitesse linéaire qui maintient les supports solides d'oxyde minéral dans le lit fluidisé, de sorte que la molécule biologique souhaitée est adsorbée sur les supports solides d'oxyde minéral ;
d) le lavage du dispositif de chromatographie avec un tampon de lavage et le rejet des constituants indésirables et des impuretés de la solution d'échantillon à partir du dispositif de colonne à lit fluidisé ;
e) l'introduction d'un tampon d'élution dans la colonne à lit fluidisé, dans laquelle ledit tampon d'élution provoque la libération de la molécule biologique souhaitée à partir des supports solides d'oxyde minéral ; et
f) la collecte de la molécule biologique souhaitée éluée de la colonne à lit fluidisé.

24. Procédé selon la revendication 23, dans lequel la vitesse linéaire est dans la gamme de 100 cm/h à 3000 cm/h.

25. Procédé selon les revendications 21 à 24, dans lequel la molécule biologique souhaitée est un polysaccharide, un plasmide, un acide nucléique ou un agrégat protéique.

26. Procédé selon l'une quelconque des revendications 21 à 24, dans lequel la molécule biologique souhaitée est une bioparticule.

27. Procédé selon la revendication 26, dans lequel la bioparticule est un virus, un vecteur viral, une protéine membranaire ou une structure cellulaire.

28. Procédé pour préparer des supports solides d'oxyde minéral tels que définis dans la revendication 1, ce procédé comprenant :
(a) la préparation d'un mélange de particules d'au moins un oxyde minéral ;
(b) la formation d'une matrice d'oxyde minéral à partir dudit mélange ;
(c) le frittage de la matrice d'oxyde minéral obtenue à une haute température qui fait fondre les sous-particules dans la matrice d'oxyde minéral, dans lequel le frittage réduit le volume poreux de la matrice d'oxyde minéral à 5 % à 25 % du volume total de la matrice d'oxyde minéral ; et
(d) la formation d'un réseau polymère interactif ancré dans les pores et stratifié sur la surface de la matrice d'oxyde minéral frittée obtenue.

29. Procédé selon la revendication 28, dans lequel l'oxyde minéral est choisi parmi l'oxyde de titane, la zircone, l'oxyde d'yttrium, l'oxyde cérique, l'oxyde de hafnium, l'oxyde de tantale, ou des mélanges de ceux-ci.

30. Procédé selon la revendication 28 ou 29, dans lequel les particules d'oxyde minéral ont une taille de particule dans la gamme de 0,1 µm à 15 µm.

31. Procédé selon la revendication 30, dans lequel les particules d'oxyde minéral ont une taille de particule de 0,1 µm à 3 µm.

32. Procédé selon la revendication 28 ou 29, dans lequel les supports solides d'oxyde minéral denses ont une surface rugueuse, et dans lequel les particules d'oxyde minéral ont une taille de particule de 3 µm à 15 µm.

33. Procédé selon l'une quelconque des revendications 28 à 32, dans lequel les billes sont formées par un procédé de sol-gel, un procédé de séchage par pulvérisation ou un procédé d'émulsion-polycondensation.

34. Procédé selon l'une quelconque des revendications 28 à 33, dans lequel le réseau polymère interactif est composé de monomères, de monomères bifonctionnels ou de mélanges de ceux-ci copolymérisés en place avec la matrice d'oxyde minéral.

35. Procédé selon l'une quelconque des revendications 28 à 33, dans lequel le réseau polymère interactif est composé d'un polymère organique soluble ou d'un mélange de polymères organiques solubles réticulés en place avec la matrice d'oxyde minéral.
